# EUROPEAN PATENT SPECIFICATION

(11) **EP 3 002 423 B1**
(45) Date of publication and mention of the grant of the patent: **01.06.2022**
(21) Application number: 14187073.3
(22) Date of filing: 30.09.2014
(51) Int. Cl.: F01K 23/10

(54) **Combined cycle power plant with a thermal storage unit and method for generating electricity by using the combined cycle power plant**
Kombikraftwerk mit einer Wärmespeichereinheit und Verfahren zur Stromerzeugung mit dem Kombikraftwerk
Centrale électrique à cycle combiné avec une unité de stockage thermique et procédé pour générer de l'électricité au moyen de la centrale électrique à cycle combiné

(43) Date of publication of application: 06.04.2016
(73) Proprietor: Siemens Gamesa Renewable Energy A/S, 7330 Brande (DK)
(72) Inventor: Reznik, Daniel, 13503 Berlin (DE); Stiesdal, Henrik, 5000 Odense C (DK)
(74) Representative: Aspacher, Karl-Georg

(56) References cited:
- US-A1- 2013 104 549
- US-A1- 2013 147 197
- US-A1- 2014 202 157

## Description

### BACKGROUND OF THE INVENTION

### 1. FIELD OF THE INVENTION

The present invention refers to a combined cycle power plant with a thermal storage unit and a method for generating electricity by using the combined cycle power plant.

### 2. DESCRIPTION OF THE RELATED ART

Combined cycle power plants with gas turbines and steam turbines (gas turbine based combined cycle power plants, CCPP) are well known.

The problem is the operation of such a gas turbine based combined cycle power plant under the conditions of a volatile energy market.

With higher penetration of renewable energy (mainly wind power and photovoltaics) and the decommissioning of old nuclear and brown coal power plants, power supply and energy price tend to become more and more volatile. The consequence is that gas turbine based combined cycle power plants are operated as flexible peak load power suppliers. This is both a technical and an economical challenge.

Utilization of the power plant is quite low and is dominated by steep peaks, especially in winter time. This imposes technically a high degree of material wear and fatigue due to often warm-up and cool down procedures. The result is a low full-power operation time of the power plant with high costs (capital expenditure, CAPEX).

The increase in renewable energy penetration requires the implementation of large scale energy storage units. In the past there have been suggested many different methods to temporarily store energy. Suggested methods are for instance (a) mechanical energy storage methods e.g. pumped hydro storage, compressed air storage and flywheels, (b) chemical energy storage methods e.g. water electrolysis and storage of hydrogen, electrochemical batteries and organic molecular storage, (c) magnetic energy storage, and (d) thermal energy storage e.g. water or molten salts.

However, only pumped hydro storage is today well-established as a large scale energy storage method. All other storage methods are lacking the possibility to provide electric energy to low costs, whereas pumped hydro storage is limited geographically to certain regions (mountains are necessary).

From US 2014/202157 A1 a combined cycle power plant is known. The combined cycle power plant comprises gas turbine for converting kinetic energy of hot gas into electric energy, a steam turbine for converting kinetic energy of steam into electric energy, a heat recovery steam generator for providing the steam by using stored thermal energy and a heat storage unit for feeding the heat recovery steam generator with thermal energy. The heat storage unit comprises solid heat storage medium with heat exchange channels through which heat exchange fluid can be led trough. By that, an exchange of thermal energy between the solid heat storage medium and the heat exchange fluid occurs.

Document US 2013/127197A1 describes a combined cycle solar power plant with a steam turbine which is fed by thermal energy which is collected by the solar unit of the power plant.

### SUMMARY OF THE INVENTION

It is an object of the invention to provide a combined cycle power plant with which lower costs are connected in comparison to the state of the art.

This object is achieved by the invention specified in the claims.

A combined cycle power plant is provided comprising at least one gas turbine for converting kinetic energy of hot gas into electric energy, at least one steam turbine for converting kinetic energy of steam into electric energy, at least one heat recovery steam generator for providing the steam by using stored thermal energy and at least one heat storage unit for feeding the heat recovery steam generator with thermal energy. The heat storage unit comprises at least one solid heat storage medium with heat exchange channels and at least one heat exchange fluid which can be led through the heat exchange channels for an exchange of thermal energy between the solid heat storage medium and the heat exchange fluid. The heat storage unit comprises at least one heater for heating up the heat exchange fluid before it can be led through the heat exchange channels. The heater is an electrical resistance heater. The electric heater works based on electrical resistance.

In addition, based on a second aspect of the invention a method for generating electrical energy by using the combined cycle power plant is provided. The generating electrical energy is carried out with the aid of excess energy which is provided by the gas turbine and/or provided by the steam turbine and which is used for charging the heat storage unit with thermal energy.

Via the heat exchange fluid a charging of the heat storage medium with thermal energy as well a discharging of the heat storage medium is carried out (removing of thermal energy of the heat storage medium).

In a preferred embodiment, the storage medium comprises stones. These stones are preferably a bulk material (bulk goods, bulk solids). The result is a stone bed with stones. The stone bed provides the heat exchange channels.

An average stone diameter is selected based on following boundary conditions: Effectiveness of the heat exchange via the stone surfaces and flow resistance of the heat exchange fluid while led through the heat exchange channels.

In principle, various average stone diameters are possible. Preferably, the stones comprise an average stone diameter which is selected from the range between 0.25 cm and 5.0 cm. More preferably, the average stone diameter is selected from the range between 0.5 cm and 2.5 cm. With this the flow resistance is good as well as the effectiveness of the heat exchange.

The effectiveness of the heat exchange depends on the kind of the stone material, too. In a preferred embodiment the stones are natural stones and/or artificial stones. For instance, the artificial stones comprise solid containers which are filled with fluidic storage material, for instance phase change material (PCM).

In a preferred embodiment, the natural stones comprise sand. Sand is cheap and is easily available.

Preferably, the heat exchange fluid comprises at least one gas. The gas is preferably air.

Thereby a gas pressure of the gas is essentially ambient pressure. So, air with ambient pressure is led through the heat exchange channels.

The leading the heat exchange fluid through the heat exchange channels can be carried out by convection (in case of a vertical arrangement, free convection can be used for transport in only one direction, charging or discharging).

Preferably, the leading the heat exchange fluid through the heat exchange channels of the storage unit is carried out with the aid of a blower (fan). Therefore, in a preferred embodiment the heat exchange unit comprises at least one blower for blowing the heat exchange fluid through the heat exchange channels of the heat exchange medium. Thereby a charging of the thermal storage occurs.

### BRIEF DESCRIPTION OF THE DRAWINGS

Further features and advantages of the invention are produced from the description of exemplary embodiments with reference to the drawings. The drawings are schematic.

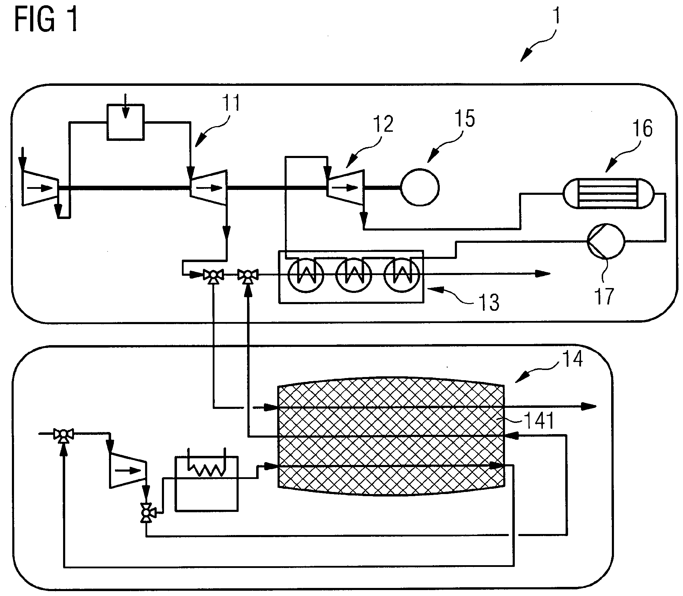

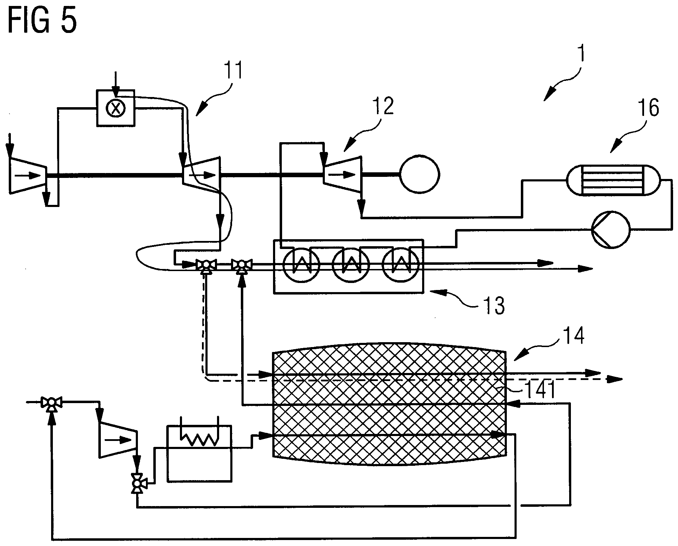

Figures 1 to 5 show combined circle power plants with different operation modes.

The invention comprises a conventional combined cycle power plant 1, consisting of a at least a gas turbine 11, a heat recovery steam generator (HRSG) 13, a steam turbine 12, an electric generator 15, a condenser 16 and a water feed pump 17.

In addition to the conventional power plant, storage equipment 14 comprising of a thermally insulated natural stone bed with stones with average stone diameters between 0.5 and 2.5 cm, an electric heater and a blower (fan) is added to the combined cycle power plant, enabling the operation as thermal energy storage.

In low-price phases, electric energy can be bought at low cost and transferred into hot air using the electric heater and the blower. The hot air can be driven through the stone bed storage, transferring the heat to the stones, which are acting as a low-cost storage medium.

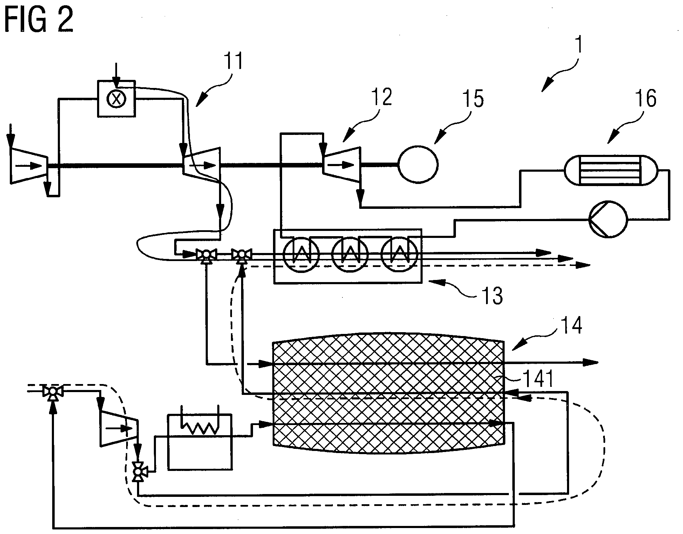

In phases with higher energy prices and/or lower feed-in of renewable power, the combined cycle power plant operator has several possibilities to generate power and revenue, using the heat stored in the storage:
Discharge can be performed during power plant's full load operation (figure 2). Additional hot air can be driven out of the storage by the fan, and joined with the gas turbine's flue gas in the HRSG. This will result in a 50% higher steam input to the steam turbine. Since steam turbines are capable of up to 50% overloading, the overload operation will not degrade the turbine, and the whole plant is able to provide 115% of the rated output using 100% of the fuel, until the stored heat is removed from the stone bed.

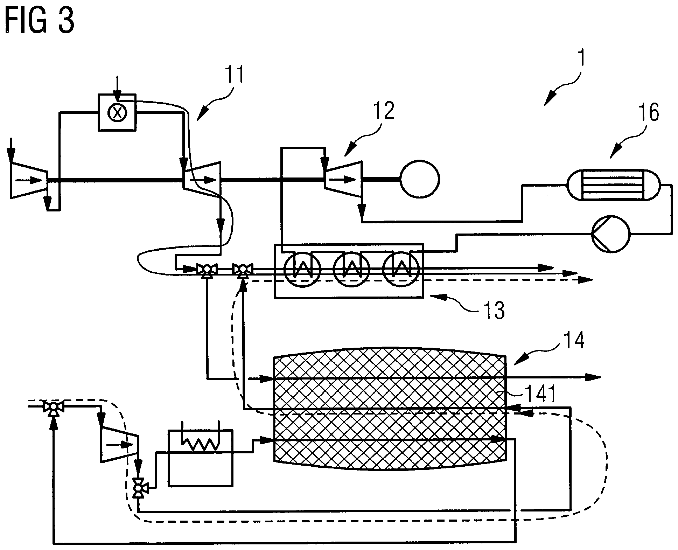

Another possibility for the gas turbine power plant operator is to reduce the gas turbine load to about 85% (figure 3), maintaining the rated efficiency but saving 15% of fuel. Adding hot air form the storage gives rise to more steam, so that the power loss from lower gas turbine fueling can be compensated to give 100% rated power output, economizing 15% fuel.

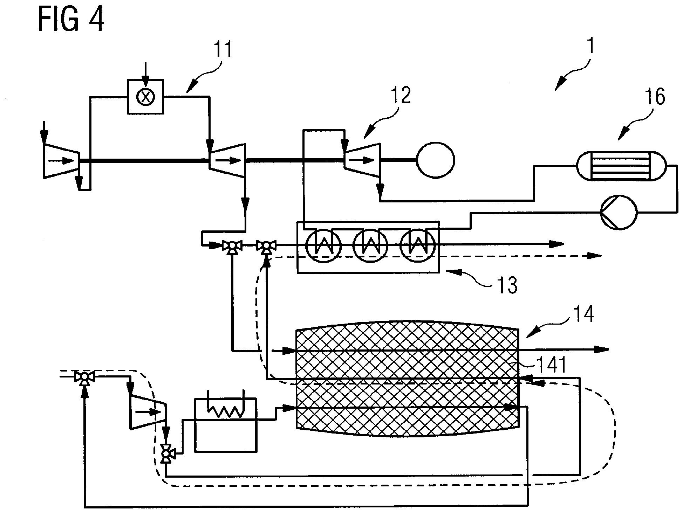

According to figure 4, a third possibility of storage discharge is to shut-off the gas turbine, but operate the HRSG using hot air extracted from the storage. This opens the possibility for the combined cycle power plant to be operated at very low load of 10-15% of rated power ( operation below 20% is not possible with today's combined cycle arrangements). Moreover. The HRSG is kept warm during the low load period, so that later power ramp-up can be much faster than at a cold start (hot start at peak load).

Without the use of bought electricity, the stone bed storage can be utilized for temporal decoupling of heat power and heat generation for combined heat and power (district heating). If heat and power demand are temporally shifted, a part or total flue gas flow can be diverted to the stone bed storage, for later use.

To summarize, the invention offers several options for flexibilization of combined cycle gas turbine's operation. The advantage of the invention is that the added costs for the charging equipment are very low, and there are hardly any costs added for discharging, since the HRSG, steam turbine and generator are part of the combined cycle power plant. The inventive steps are the combination of known combined cycle power plant, a stone bed storage, an electric heater, a fan, and the connections between the components, as depicted in figure 1. Different operation modes are depicted in figures 2-5.

## Claims

1. Combined cycle power plant (1) comprising
- at least one gas turbine (11) for converting kinetic energy of hot gas into electric energy;
- at least one steam turbine (12) for converting kinetic energy of steam into electric energy;
- at least one heat recovery steam generator (13) for providing the steam by using stored thermal energy; and
- at least one heat storage unit (14) for feeding the heat recovery steam generator with thermal energy;
wherein the heat storage unit (14)
- comprises at least one solid heat storage medium (141) with heat exchange channels ;
- at least one heat exchange fluid which can be led through the heat exchange channels for an exchange of thermal energy between the solid heat storage medium (141) and the heat exchange fluid **characterised in that**
- the heat storage unit comprises at least one heater for heating up the heat exchange fluid before it can be led through the heat exchange channels;
wherein
- the heater is an electrical resistance heater.

2. Combined cycle power plant according to claim 1, wherein the storage medium comprises stones.

3. Combined cycle power plant according to claim 2, wherein the stones comprise an average stone diameter which is selected from the range between 0.25 cm and 5.0 cm.

4. Combined cycle power plant according to claim 3, wherein the average stone diameter is selected from the range between 0.5 cm and 2.5 cm.

5. Combined cycle power plant according to one of the claims 2 to 4, wherein the stones are natural stones and/or artificial stones.

6. Combined cycle power plant according to claim 5, wherein the natural stones comprise sand.

7. Combined cycle power plant according to one of the claims 1 to 6, wherein the heat exchange fluid comprises at least one gas.

8. Combined cycle power plant according to claim 7, wherein the gas is air.

9. Combined cycle power plant according to claim 7 or 8, wherein a gas pressure of the gas is essentially ambient pressure.

10. Combined cycle power plant according to one of the claims 1 to 9, wherein the storage unit comprises at least one blower for blowing the heat exchange fluid through the heat exchange channels of the heat exchange medium.

11. Method for generating electrical energy by using a combined cycle power plant according to one of the claims 1 to 10 with the aid of excess energy which is provided by the gas turbine and/or provided by the steam turbine and which is used for charging the heat storage unit with thermal energy.

## Patentansprüche

1. Kombikraftwerk (1), umfassend
- mindestens eine Gasturbine (11) zum Umwandeln kinetischer Energie von Heißgas in elektrische Energie,
- mindestens eine Dampfturbine (12) zum Umwandeln kinetischer Energie von Dampf in elektrische Energie;
- mindestens einen Abhitzedampferzeuger (13) zum Bereitstellen des Dampfs unter Verwendung von gespeicherter thermischer Energie; und
- mindestens eine Wärmespeicherungseinheit (14) zum Speisen des Abhitzedampferzeugers mit thermischer Energie;
wobei die Wärmespeicherungseinheit (14)
- mindestens ein festes Wärmespeicherungsmedium (141) mit Wärmeaustauschkanälen umfasst;
- mindestens ein Wärmeaustauschfluid, das durch die Wärmeaustauschkanäle zum Austausch von thermischer Energie zwischen dem festen Wärmespeicherungsmedium (141) und dem Wärmeaustauschfluid geführt werden kann; **dadurch gekennzeichnet, dass**
- die Wärmespeicherungseinheit mindestens eine Heizung zum Aufheizen des Wärmeaustauschfluids, bevor es durch die Wärmeaustauschkanäle geführt werden kann, umfasst;
wobei
- die Heizung eine elektrische Widerstandsheizung ist.

2. Kombikraftwerk nach Anspruch 1, wobei das Speicherungsmedium Steine umfasst.

3. Kombikraftwerk nach Anspruch 2, wobei die Steine einen durchschnittlichen Steindurchmesser umfassen, der ausgewählt ist aus dem Bereich zwischen 0,25 cm und 5,0 cm.

4. Kombikraftwerk nach Anspruch 3, wobei der durchschnittliche Steindurchmesser ausgewählt ist aus dem Bereich zwischen 0,5 cm und 2,5 cm.

5. Kombikraftwerk nach einem der Ansprüche 2 bis 4, wobei die Steine natürliche Steine und/oder künstliche Steine sind.

6. Kombikraftwerk nach Anspruch 5, wobei die natürlichen Steine Sand umfassen.

7. Kombikraftwerk nach einem der Ansprüche 1 bis 6, wobei das Wärmeaustauschfluid mindestens ein Gas umfasst.

8. Kombikraftwerk nach Anspruch 7, wobei das Gas Luft ist.

9. Kombikraftwerk nach Anspruch 7 oder 8, wobei ein Gasdruck des Gases im Wesentlichen Umgebungsdruck ist.

10. Kombikraftwerk nach einem der Ansprüche 1 bis 9, wobei die Speicherungseinheit mindestens ein Gebläse zum Blasen des Wärmeaustauschfluids durch die Wärmeaustauschkanäle des Wärmeaustauschmediums umfasst.

11. Verfahren zum Erzeugen von elektrischer Energie unter Verwendung eines Kombikraftwerks nach einem der Ansprüche 1 bis 10 mithilfe von überschüssiger Energie, die durch die Gasturbine bereitgestellt wird und/oder durch die Dampfturbine bereitgestellt wird und die zum Aufladen der Wärmespeicherungseinheit mit thermischer Energie verwendet wird.

## Revendications

1. Centrale électrique à cycle combiné (1) comprenant :
- au moins une turbine à gaz (11) permettant de convertir l'énergie cinétique d'un gaz chaud en énergie électrique ;
- au moins une turbine à vapeur (12) permettant de convertir l'énergie cinétique d'une vapeur en énergie électrique ;
- au moins un générateur de vapeur à récupération de chaleur (13) permettant de fournir la vapeur en utilisant l'énergie thermique stockée ; et
- au moins une unité de stockage de chaleur (14) permettant d'alimenter le générateur de vapeur à récupération de chaleur avec de l'énergie thermique ;
dans laquelle l'unité de stockage de chaleur (14) :
- comprend au moins un support de stockage de chaleur solide (141) avec des canaux d'échange de chaleur ;
- au moins un fluide d'échange de chaleur qui peut être mené à travers les canaux d'échange pour un échange d'énergie thermique entre le support de stockage de chaleur solide (141) et le fluide d'échange de chaleur, **caractérisée en ce que**
- l'unité de stockage de chaleur comprend au moins un chauffage permettant de chauffer le fluide d'échange de chaleur avant qu'il ne puisse être mené à travers les canaux d'échange de chaleur ;
dans laquelle :
- le chauffage est un chauffage à résistance électrique.

2. Centrale électrique à cycle combiné selon la revendication 1, dans laquelle le support de stockage comprend des pierres.

3. Centrale électrique à cycle combiné selon la revendication 2, dans laquelle les pierres comprennent un diamètre de pierre moyen qui est sélectionné dans la plage comprise entre 0,25 cm et 5,0 cm.

4. Centrale électrique à cycle combiné selon la revendication 3, dans laquelle le diamètre moyen de pierre est sélectionné dans la plage comprise entre 0,5 cm et 2,5 cm.

5. Centrale électrique à cycle combiné selon l'une quelconque des revendications 2 à 4, dans laquelle les pierres sont des pierres naturelles et/ou des pierres artificielles.

6. Centrale électrique à cycle combiné selon la revendication 5, dans laquelle les pierres naturelles comprennent du sable.

7. Centrale électrique à cycle combiné selon l'une quelconque des revendications 1 à 6, dans laquelle le fluide à échange de chaleur comprend au moins un gaz.

8. Centrale électrique à cycle combiné selon la revendication 7, dans laquelle le gaz est de l'air.

9. Centrale électrique à cycle combiné selon la revendication 7 ou 8, dans laquelle une pression du gaz est essentiellement la pression atmosphérique.

10. Centrale électrique à cycle combiné selon l'une quelconque des revendications 1 à 9, dans laquelle l'unité de stockage comprend au moins un souffleur permettant de souffler le fluide à échange de chaleur à travers les canaux d'échange de chaleur du support d'échange de chaleur.

11. Procédé permettant de générer de l'énergie électrique en utilisant une centrale électrique à cycle combiné, selon l'une des revendications 1 à 10, à l'aide de l'énergie en surplus qui est fournie par la turbine à gaz et/ou fournie par la turbine à vapeur et qui est utilisée afin de charger l'unité de stockage de chaleur avec de l'énergie thermique.
